# EUROPEAN PATENT APPLICATION

(11) **EP 1 313 054 A2**
(43) Date of publication of application: **21.05.2003**
(21) Application number: 02257945.2
(22) Date of filing: 19.11.2002
(51) Int. Cl.: G06F 17/60

(54) **Automated negotiation agent and method of evaluation risk**

(30) Priority: 20.11.2001 GB 0127743
(71) Applicant: Hewlett-Packard Company, Palo Alto, CA 94304 (US)
(72) Inventor: Casassa Mont, Marco, Stoke Gifford, Bristol BS34 8BF (GB); Bartolini, Claudio, Menlo Park, CA 94025 (US); Byde, Andrew Robert, Montpellier, Bristol BS6 5ES (GB); Cliff, David Trevor, Southville, Bristol BS3 1AZ (GB)
(74) Representative: Lawrence, Richard Anthony

(57) **Abstract**

There is provided an automated negotiation agent 1 and method of evaluating risk and trust from different contractual viewpoints during electronic negotiation of contracts, preferably e-contracts, in a business to business environment. The negotiation agent 1 on receiving a contract proposal from another agent 15, analyses the contract proposal from different viewpoints to determine measures of the risk and trust involved. A response 20 is formulated from the measures of risk and trust, and is returned to the other agent 15. The negotiation agent 1 has an evaluation engine 9 which evaluates the risk and viewpoints for the contract proposal by accessing a risk and trust functions and viewpoints database 4, a contract template database 2, a contract context database 13 and contract history repository 10. The negotiation agent also has a negotiation engine 8 that evaluates the effect of the contract proposal from different levels using the risk and trust viewpoints received from the evaluation engine 9. The negotiation engine 8 is driven by a utility function and can access the contract template database 2 and the contract history repository 10 during its evaluation. The response returned to the other agent 15 is dependant on the evaluation and is output by the negotiation engine 8.

## Description

The present invention relates to an apparatus and method of evaluating risk and trust in contract negotiation by electronic means, and particularly to an automated agent and method for evaluating risk and trust from different contractual viewpoints in a B2B environment.

The term B2B, in the context of electronic commerce, refers to businesses conducting transactions with one another via the Internet. An e-contract or electronic contract is a commercial contract formed electronically for the purchase or sale of goods or services - although the present invention is particularly relevant to e-contracts, it is also relevant to contracts negotiated electronically (and formed by other means). For convenience, references to "e-contract" below are taken to include contracts which are negotiated, rather than necessarily formed, electronically.

A negotiation of contract terms involves the negotiation of multiple claims each involving the negotiation of sub-items. Any information used to make decisions has to be trustworthy. Hence there is a need to understand the level of risk and trust associated to negotiation steps, both locally (for example, at the level of a contractual claim) and at a higher level of abstraction, for example, by considering the impact on the overall contract under negotiation and other previously stipulated contracts. In situations where an agent or party has no previous knowledge about another party with which it wants to negotiation an electronic contract, it is very difficult to quantify any of the risks involved, particularly those concerned with the context of the negotiation between the parties.

The thesis: Trust in a Cryptographic Economy and Digital Security Deposits: Protocols and Policies, J M Reagle Jr., HTTP:/reagle.org/joseph/commerce/thesis/thesis.html provides an overview of trust in e-commerce with a high level reference to trust utility function. This paper also provides a description of certificates and the way to deal with trust is by using Certificate Authorities hierarchies. The www.dicarta.com website provides support to people for negotiation of digital contracts. It is based on a collaborative environment where people can refine digital contracts and manage their life cycle. This product allows administrators to associate risk labels (low, medium, high) to contact clauses, but it does not provide a dynamic measurement and management of trust and risk viewpoints at different levels of abstractions (contract claims, contract as a whole entity, across multiple contracts) and risk mitigation support.
There is a need for an automated agent that can measure the levels of risk and trust during contract negotiation conducted on the Internet between parties, without making any assumptions about the reciprocal knowledge of the negotiators.

The present invention seeks to address or significantly mitigate one or more of the afore-mentioned problems.

The term e-contract template is defined as comprising a set of clauses. Each clause may contain admissible statements for a clause whereby a list of options may be provided, a list of items to be refined within a clause (i.e. price, deadline, etc.) whereby a list of admissible values for each item may be provided, and admissible exceptions defining how to deal with problems related to the fulfilment of a clause whereby a list of options may be provided.

For the purposes of this specification the term clause is used to specify rights, obligations, commitments, intents.

The term utility function is defined, for the purposes of this specification, as a measure of the preferences (higher selling price, lower buying price, etc.,) of the owner of the agent. The utility function is driven by "economical" factors and, for the purposes of this specification, also by additional trust and risk measures as parameters. The term viewpoint is defined, for the purposes of this specification, as a point of measurement of risk and trust, and is defined by one or more risk and trust functions. Viewpoints can be at different levels of abstractions, such as, at the level of e-contract claim, at the level of an aggregation of e-contract claims, at the level of the whole e-contract, and at the level of an aggregation of e-contracts. A trust function is defined as a function that is used to calculate the level of trust at a particular viewpoint, and similarly, a risk function is defined as a function that is used to calculate the level of risk at a particular viewpoint. Both functions make use of contextual information contained in a contract context database which is a repository of information of past contracts. Both risk and trust functions can make use of measures of risk and trust calculated within other viewpoints, i.e. at different levels of abstraction, and can be expressed in many different ways or formalisms, for example as logical conditions.

According to a first aspect of the invention there is provided a method of determining risk and trust for e-contracts under negotiation, comprising the steps: receiving a contract proposal from a negotiation agent; analysing the contract proposal using a contract template and from different viewpoints to determine measures of the risk and trust involved; formulating a response from the measures of risk and trust to send to the negotiation agent; and returning the response to the negotiation agent.

According to a second aspect of the invention there is provided a negotiating agent for measuring risk and trust in real time during e-contract negotiation comprising: an evaluation engine for receiving a contract proposal and evaluating the risk and trust viewpoints for the contract proposal; a risk and trust functions and viewpoints store for storing metadata associated with contract templates, and accessible by the evaluation engine for evaluating the risk and trust viewpoints; a contract context store for storing contextual data associated with contract negotiation, and accessible by the evaluation engine for evaluating the risk and trust viewpoints; a negotiation engine for receiving risk and trust viewpoints from the evaluation engine, and driven by a utility function for evaluating the effect of the contract proposal from different levels; a contract template store for storing metadata associated with contract templates, and accessible by the evaluation engine for evaluating the risk and trust viewpoints and accessible by the negotiation engine for evaluating the effect of the contract proposal; and a contract history repository for storing data associated with past contracts, and accessible by the evaluation engine for evaluating the risk and trust viewpoints and the negotiating engine for evaluating the effect of the contract proposal, wherein the negotiation engine is configured for outputting a response that is dependent on the evaluation of the effect of the contract proposal.

According to a third aspect of the invention there is provided a computer readable storage medium storing instructions that, when executed by a computer, cause the computer to perform a method of determining risk and trust for e-contracts under negotiation according to the first aspect.

According to the fourth aspect of the invention there is provided a messaging protocol for relaying inter-agent communications between negotiating agents using the method according to the first aspect.

In a preferred embodiment the method is carried out in real-time.

Other aspects and features of the present invention will become apparent to those ordinarily skilled in the art upon review of the following description of the specific embodiments of the invention in conjunction with the accompanying figure.

Embodiments of the invention will now be described by way of example only, with reference to the drawing in which:

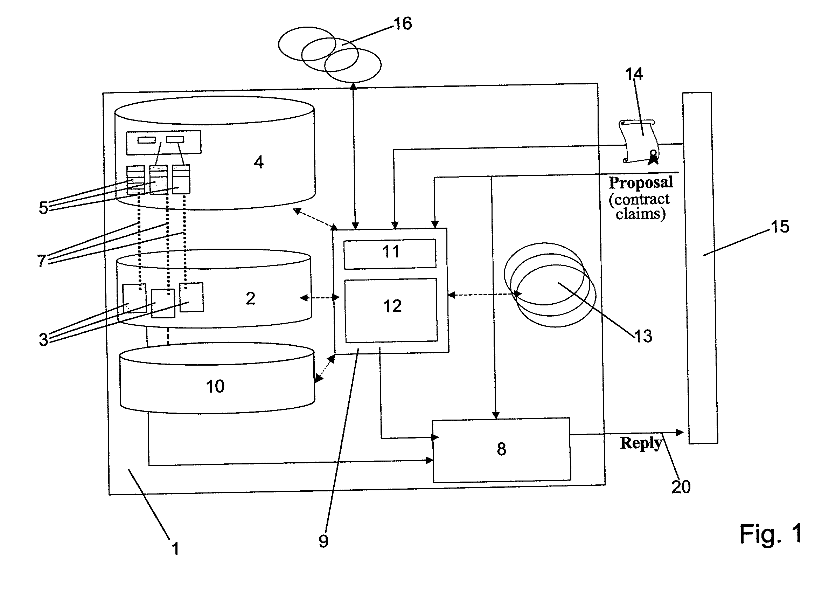

Figure 1 is a schematic diagram depicting an automated agent according to an embodiment of the present invention, and an illustrative environment in which it may be implemented.

An automated agent addresses real-time risks and trust measurement by considering different viewpoints, in the context of negotiation of contract terms and conditions. Metadata is associated with both contract templates and the aggregation of these templates to explicitly describe risk functions, trust functions and recommended actions. Measures of risk and trust may then be analyzed from different perspectives in order to fully appreciate the impact of a particular claim or refinement of a contract. Finally the agent may be able to suggest actions in order to mitigate situations of risk.

With reference to Figure 1, a high level system architecture is shown, in which a negotiator (agent) 1 uses contract templates 3 to refine contract claims and drive the negotiation process. E-contract templates 3 are used as a way of defining e-contract skeletons to be refined by the agents 1, and containing, for example, definitions of levels of abstractions of claims. Viewpoints 5 are associated by means of pointers 7 to e-contract template claims, to clusters of these claims, to a whole e-contract template 3 or an association of e-contracts. The agent 1 comprises a negotiation engine 8, and a centralised engine 9 that is closely associated with a risk and trust functions & viewpoints database 4, a contract templates database 2 and a contract history repository 10. The contract templates database 2 also inputs data directly to the negotiation engine 8, as does the contract history repository 10. The centralised engine 9 has an interpreter module11, and a trust/risk viewpoint manager 12 to which data may be input from a contract context database 13. The combined action of the interpreter 11 and the trust/viewpoint manager 12, i.e. the centralised engine 9, is to calculate risk and trust functions in both a high level way and a fine-grain way by referring to the functions and viewpoints database 4, the contract templates database 2 and the contract context database 13. In this way it is possible to define risk and trust functions at the level of the individual claims, at the level of the contract, and at the contextual level of the contract with respect to market conditions and/or past history in the context of other contracts. Depending on the information that has been acquired by the other remote agents 15, it is possible to evaluate, in real-time, the level of risk and trust in accepting a particular claim, and the overall level of risk and trust at the contract level, as well as at the contextual level.

The risk and trust viewpoints are then input into the negotiation engine 8 which is driven by a utility function for the risk and trust involved with the contract proposal. The negotiation engine 8 evaluates the effect of the particular proposal, for example at the claim level, and at the contract level. The evaluation may be constrained by policies and rules.

After conducting the evaluation, the negotiation engine 8 outputs a set of suggested actions, for example to send 20 a reply to the remote agent 15 containing an acceptance of the contract proposal, or to ask a remote agent for more credentials 14 because the proposal is too risky. The measures of risk and trust may be in any form, for example numbers, or strings.

In order to be able to mitigate risks, the negotiator needs to know contextual tactics. One of these tactics will consist of requiring the remote agent to provide trustworthy information underpinning its claims.

In an exemplary arrangement, the negotiation engine 8 may be modified so as to be able to collate information about the trustworthiness or risk involved with respect to a contract proposal, and to put appropriate constraints into the reply to be sent 20 back to the remote agent 15. In this case the system is adaptive, and the more the contract proposal is deemed to be risky or untrustworthy, the greater the amount of information that is asked from the remote agent.

The advantage of the disclosed method and arrangement is that the risk and trust for the contract proposal is measured from different perspectives or viewpoints. For instance, at the claim level there may be a proposal that is deemed to be very risky when viewing the contract in isolation, but from a broader perspective, for example in the context of a set of contracts between parties, the local risk, i.e. at the claim level, is judged to be insignificant. This may mean, therefore, that no action is required.

Professionals such as risk/trust analysts are used for associating metadata to both contract templates 3 and aggregation of contract templates in order to define multiple "viewpoints" where risk and trust can be measured, aggregated and correlated and possible risk mitigation tactics suggested. Similarly a professional such as an economist is envisaged as calculating the utility function for the agent.
The agent 1 intercepts contractual proposals coming from remote agents 15 and retrieves the relevant metadata, from the functions and viewpoints database 4.

The centralised engine 9 interprets risks and trust functions at different levels of abstraction as defined by metadata, to identify:
- Local risks and trust, at the claim level;
- Risk and trust at the level of e-contract, by aggregating lower level risks;
- Risk and trust across multiple related e-contracts (as defined by contract aggregation metadata), by aggregating lower level risks.

Measures of risks and trust may be composed at different levels of abstraction by aggregation/correlation functions (for example by using finite-state machines, rule-based systems, and conditions) and they may be used to make decisions on the next steps.

For example, the risk associated to a particular contract claim (under negotiation) can be very high (example: very short time frame to fulfil an order) but in the context of the overall contract and across other contracts the risk is low. In such a case no action is required.

In another example, the risk associated to a particular contract claim (under negotiation) is medium (example: preferred payment method) but combined with risks associated to other contract claims, for example frequency of payment, delivery deadlines and production based deadlines, it originates a very high risk at the contract level. In such a case a suggested action is to require a digitally signed credential 14 underpinning the remote claim.

A risk or trust function may be implemented by using a macro, a script or a set of rules. It can contain conditions, tests, cases, etc. A risk or trust function can process multiple sources of data. Data can refer to the current contractual proposals, information related to a broader set of contracts, information originated by external data providers 16 (credit rating systems, financial systems, warehouse systems, etc).

In particular, a trust function may calculate the trustworthiness of external data, based on trust management constraints (like the issuer of credentials, expiration date, attributes, etc).

Traders can use digitally signed data, like digital credentials 14 to underpin their contractual proposals.

Depending on the current evaluation of risk and on the contextual information, one or more risk mitigation tactics can be activated and suggested to the agent negotiator 1 along with the indication of risk and trust at different viewpoints. An example of a suggested action is to ask the remote negotiator 15 for trusted information underpinning a particular proposal during contract negotiation.

Each contract under negotiation is associated to a negotiation context containing relevant information, like links to the contract templates 3, trusted credentials 14, relevant metadata, intermediate risk/trust measurements etc.

One implementation of the invention makes use of an XML notation to describe e-contract templates. For example, consider a company AAA that wants to insure its assets: its car fleet and its headquarters building. This company uses the agent 1 to negotiate on-line with multiple insurance companies. The negotiation process is driven by two insurance e-contract templates 3 describing admissible e-contracts.

The first e-contract template 3 relates to the insurance of the company AAA's whole car fleet and is as follows:

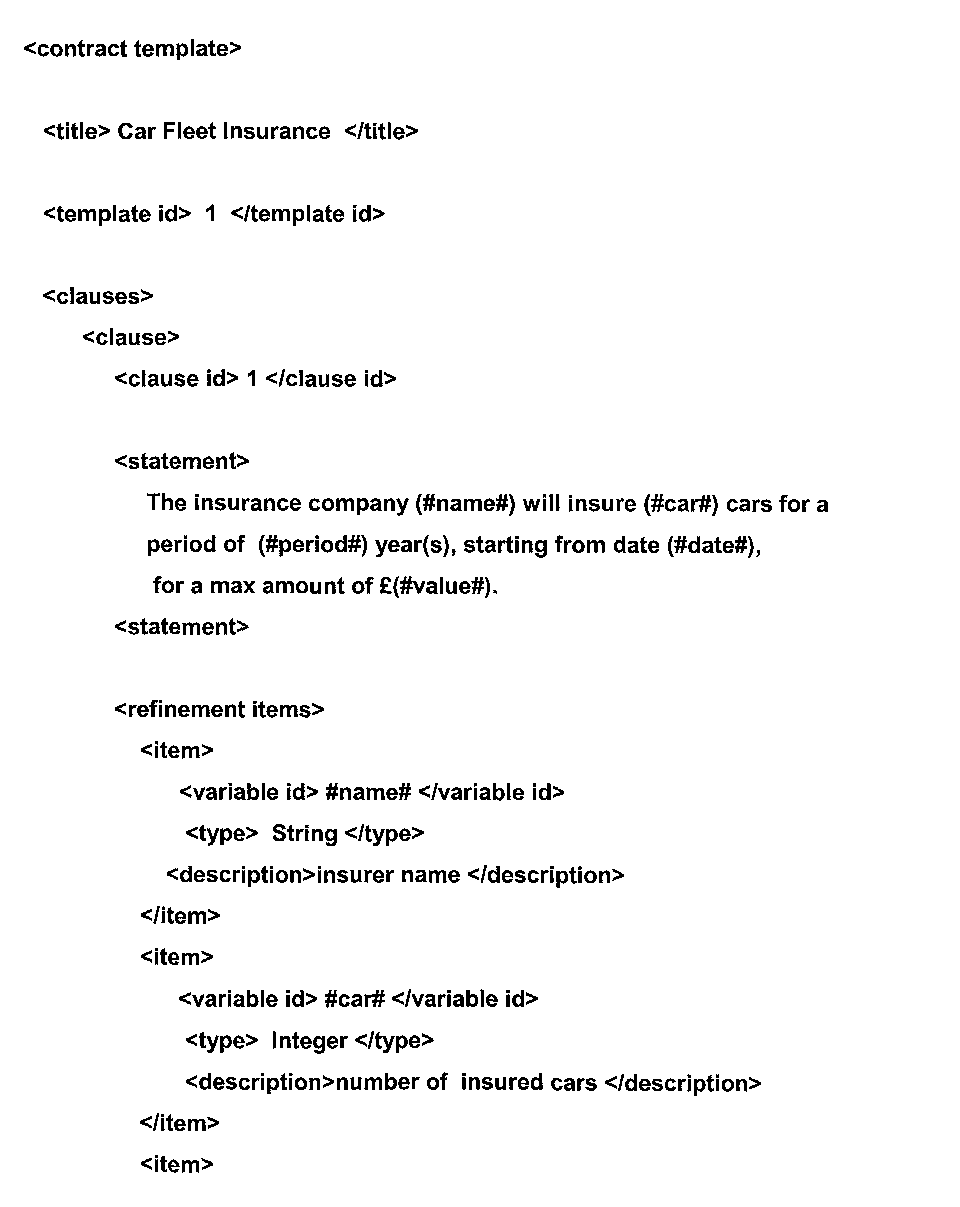

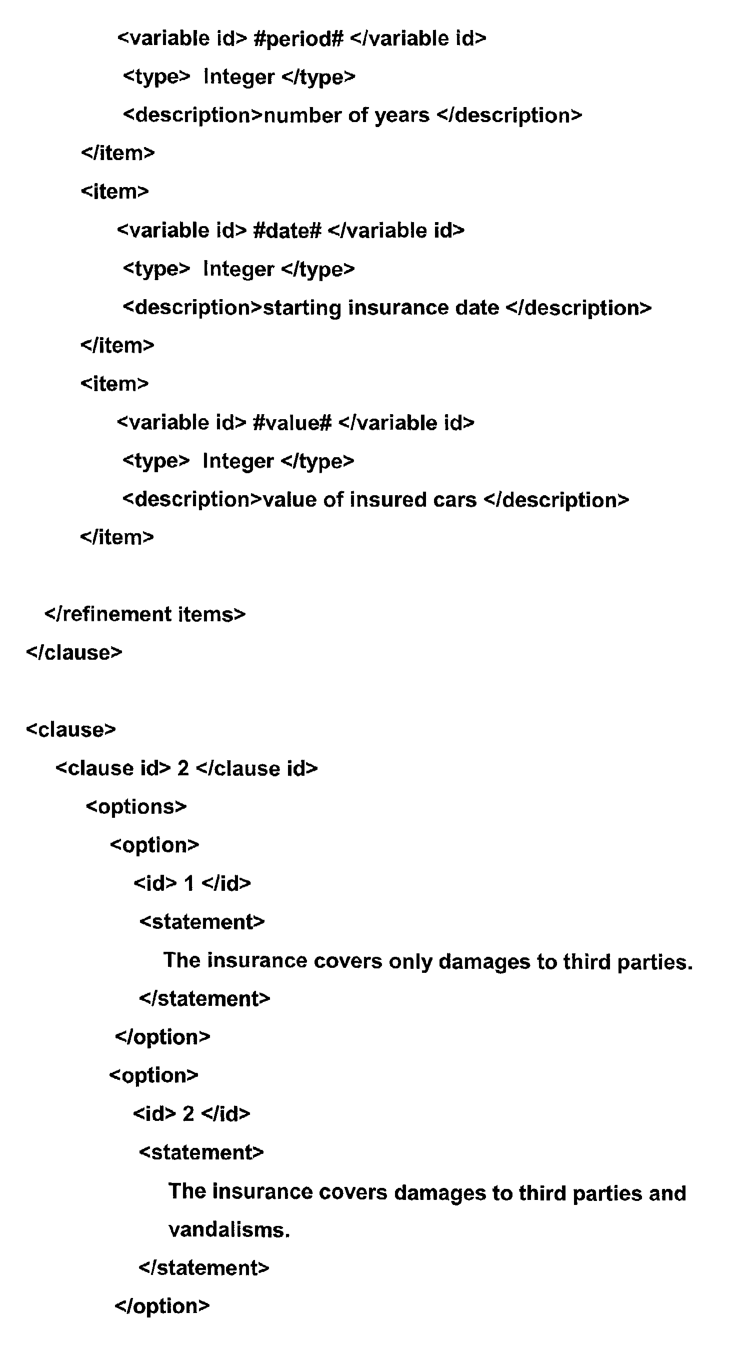

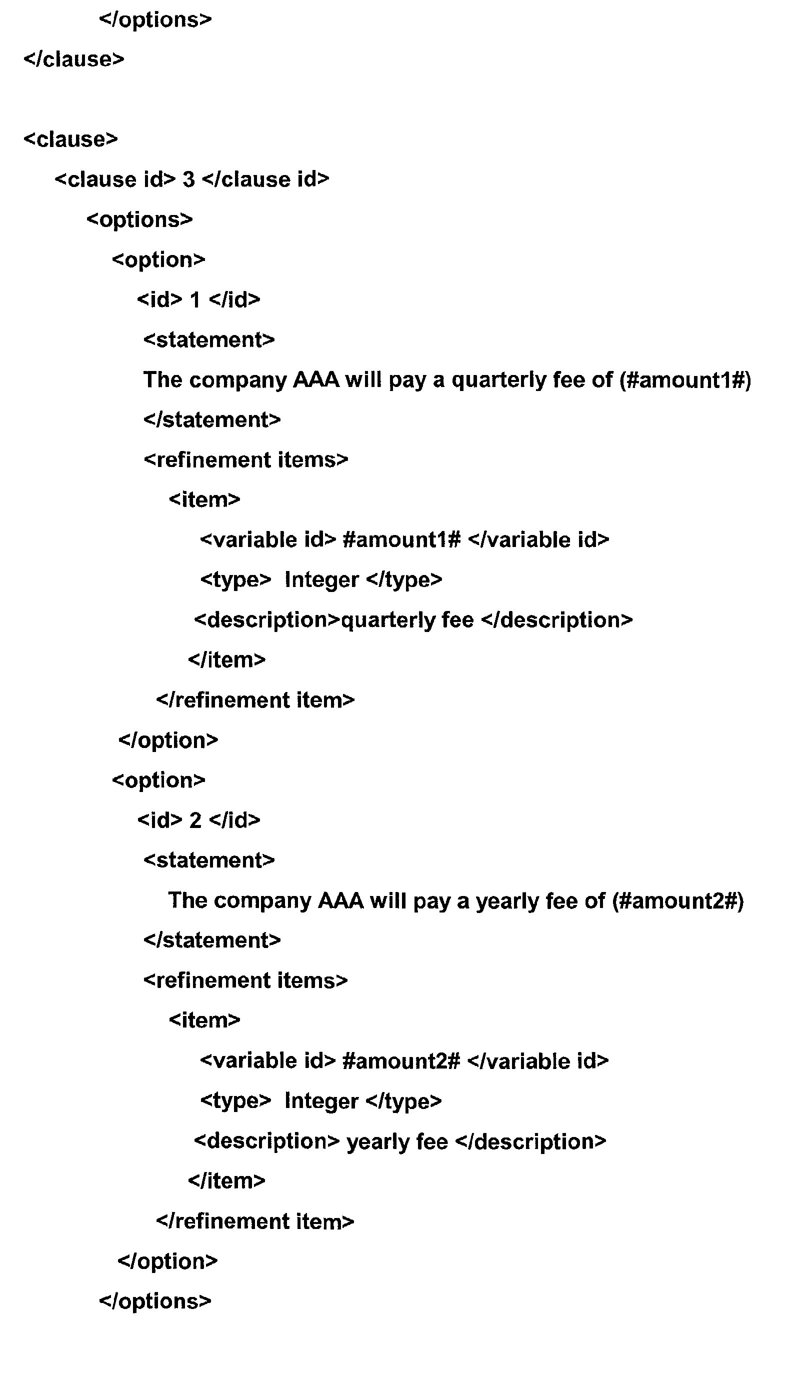

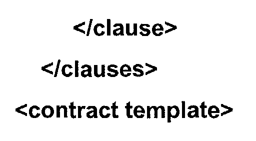

The above template contains three clauses specifying what is insured, the insurance coverage and the insurance fee. Clauses (1) and (3) contain multiple statement options, which are the only ones admissible. Each template, clause, option and refinement item is associated to an unique identifier 7.

Values for the "refinement items" specified in the e-contract template 3 need to be specified during the negotiation phase. When multiple options are available for a clause, the negotiated parties must agree on one.

The following e-contract template describes the insurance criteria for company AAA's headquarters building and its contents:

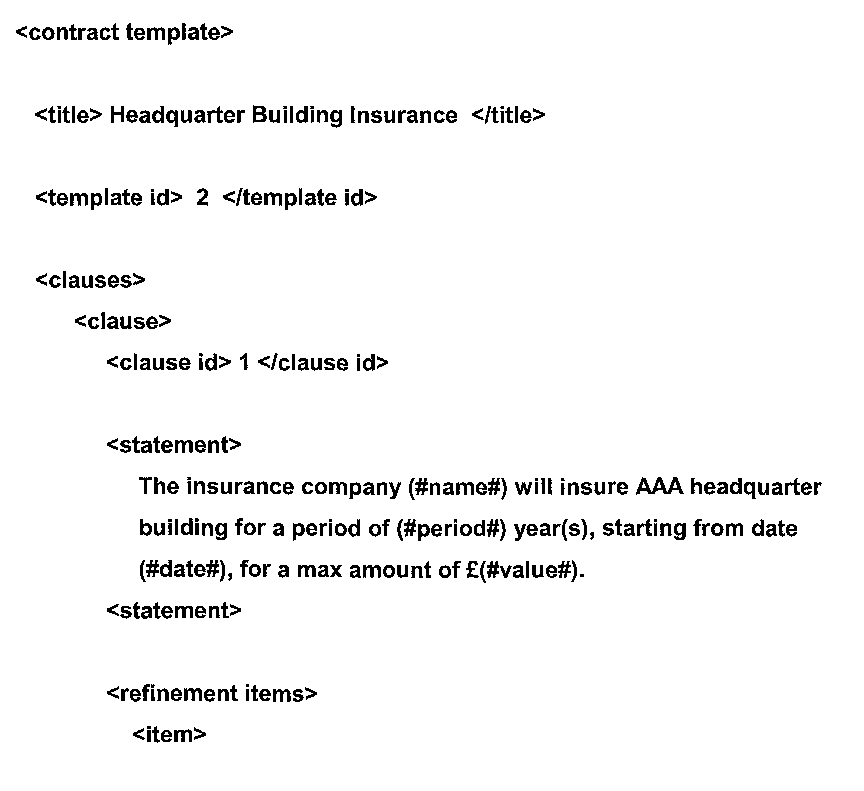

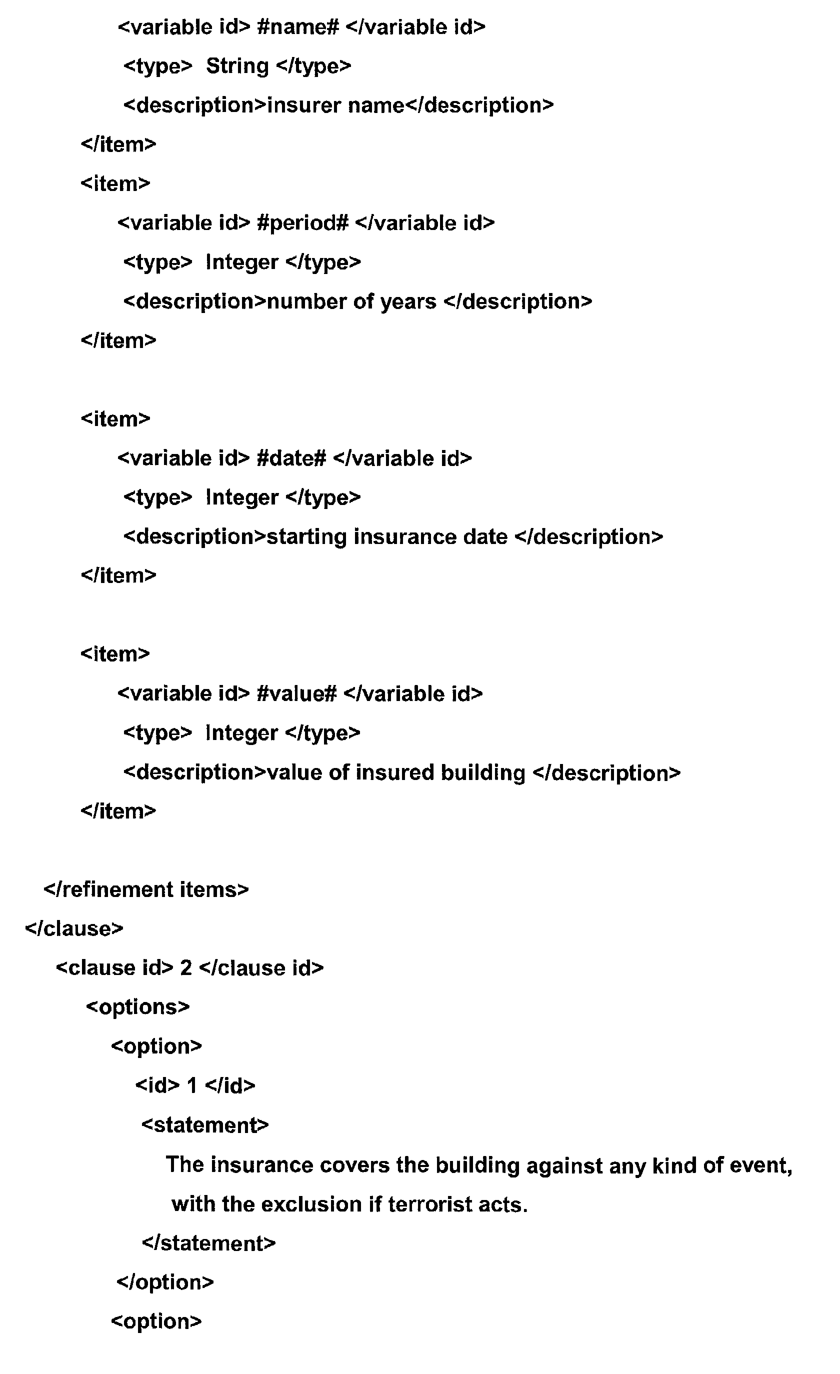

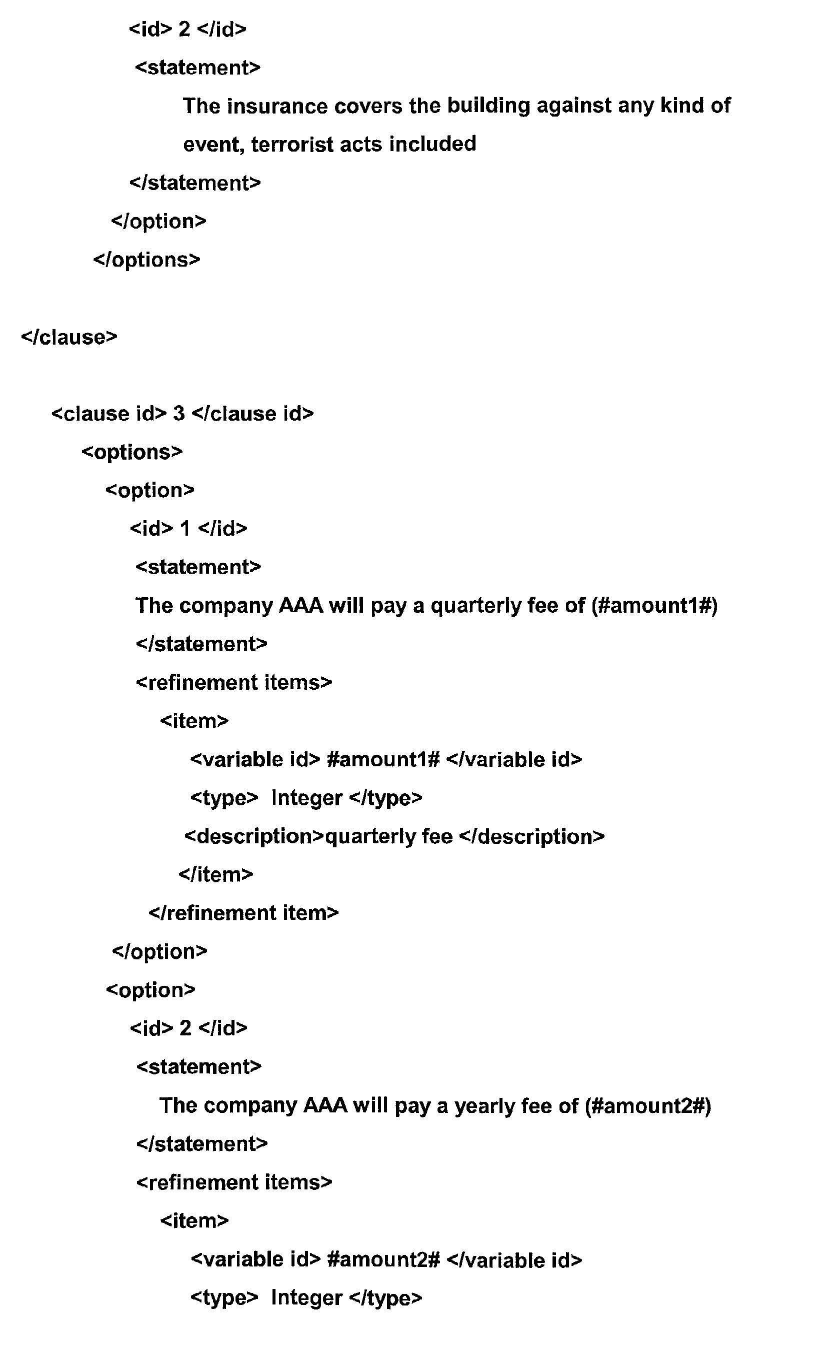

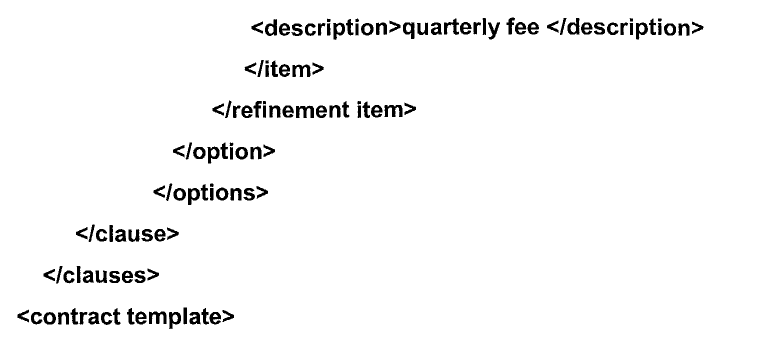

The two e-contract templates 3 described are stored in the contract templates database 2.

In the example the company AAA considers its headquarters as its main asset, therefore, it is of fundamental importance that the insurer is a fully trustable entity. Its car fleet is also important but not so strategic.

Using the agent 1 the e-contracts are registered on behalf of AAA to insure the company's assets. The negotiation engine 8 will negotiate, in parallel, e-contracts for both AAA's car fleet and AAA's building with different insurance companies.

Company AAA's insurance strategy is the result of a compromise between involved risks, trust and economic factors. For example, as the headquarters building is strategic, AAA is not willing to insure it with insurance companies that are not reasonably trustworthy, even if cheaper insurances are potentially available. Instead, such a risk could be acceptable when dealing with the insurance of its car fleet. In principle, of course, AAA wants to minimise the amount of money it has to pay and at the same time reduce the overall risk by insuring its assets with trusted and reliable insurance companies.

The negotiation engine 8 makes use of levels of risk and trust measured at different levels of abstraction to drive the negotiation process.

It is of course necessary to explicitly describe the relevant viewpoints and the associated trust and risk functions.

The following is an example of a simplified description of the relevant viewpoints and associated trust and risk functions, based on an XML notation, for the e-contract templates previously described.

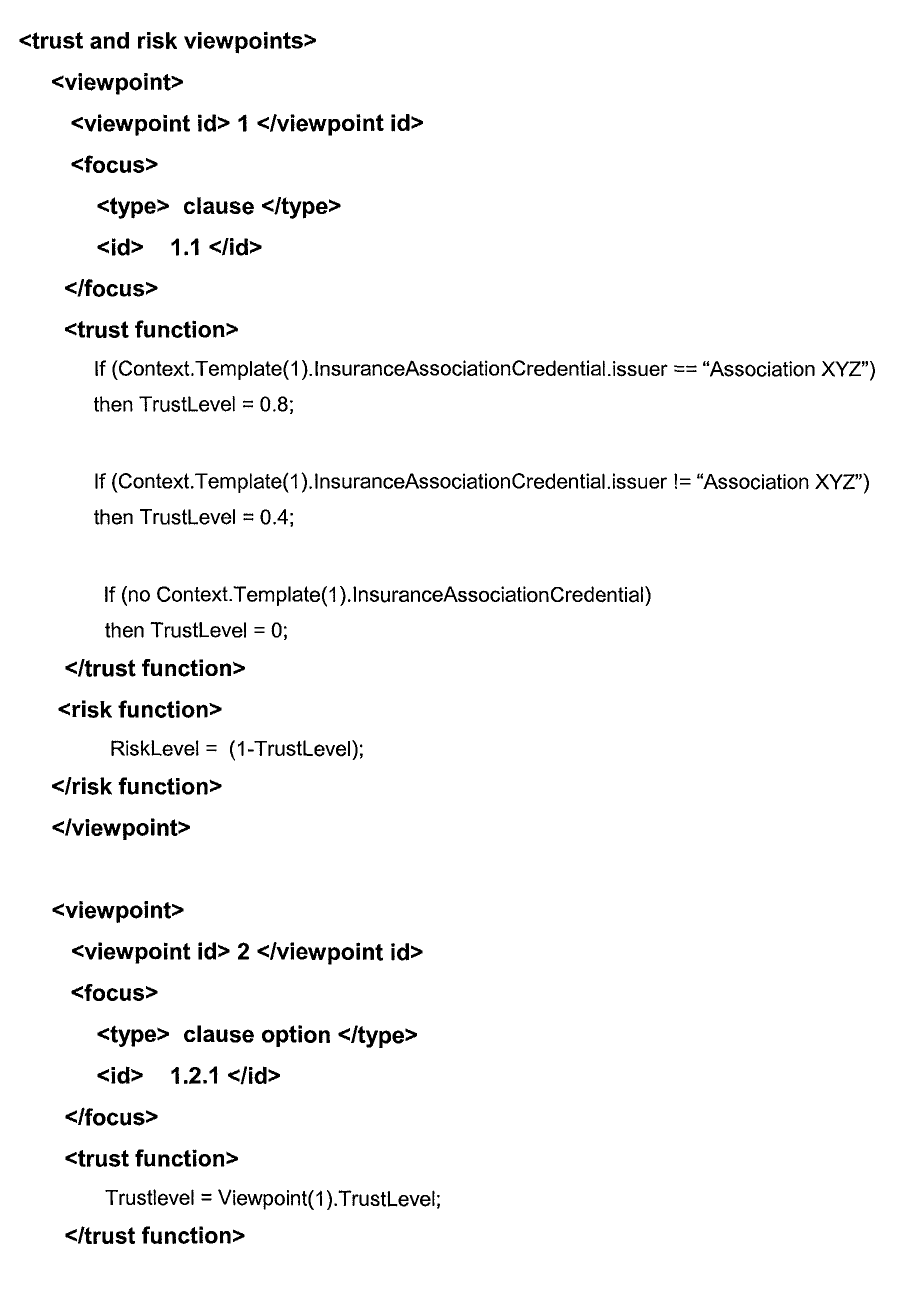

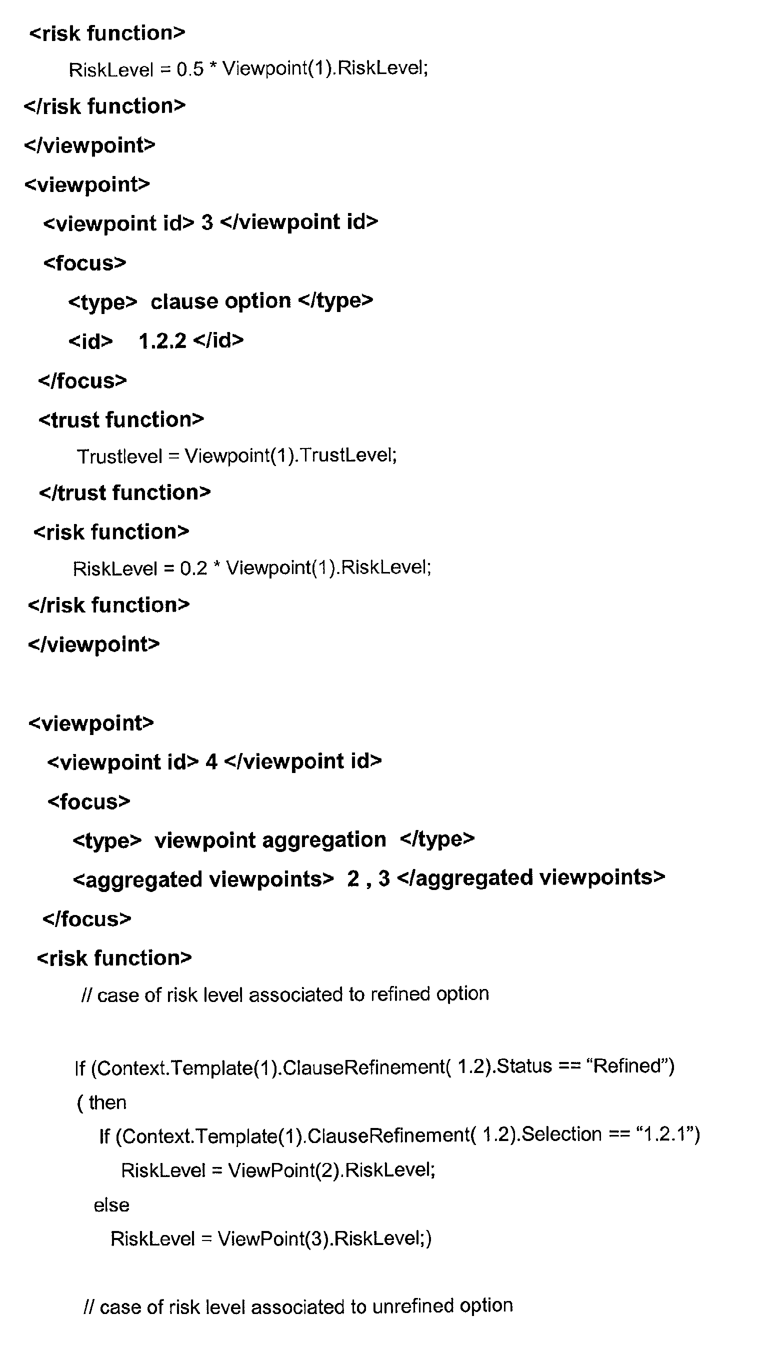

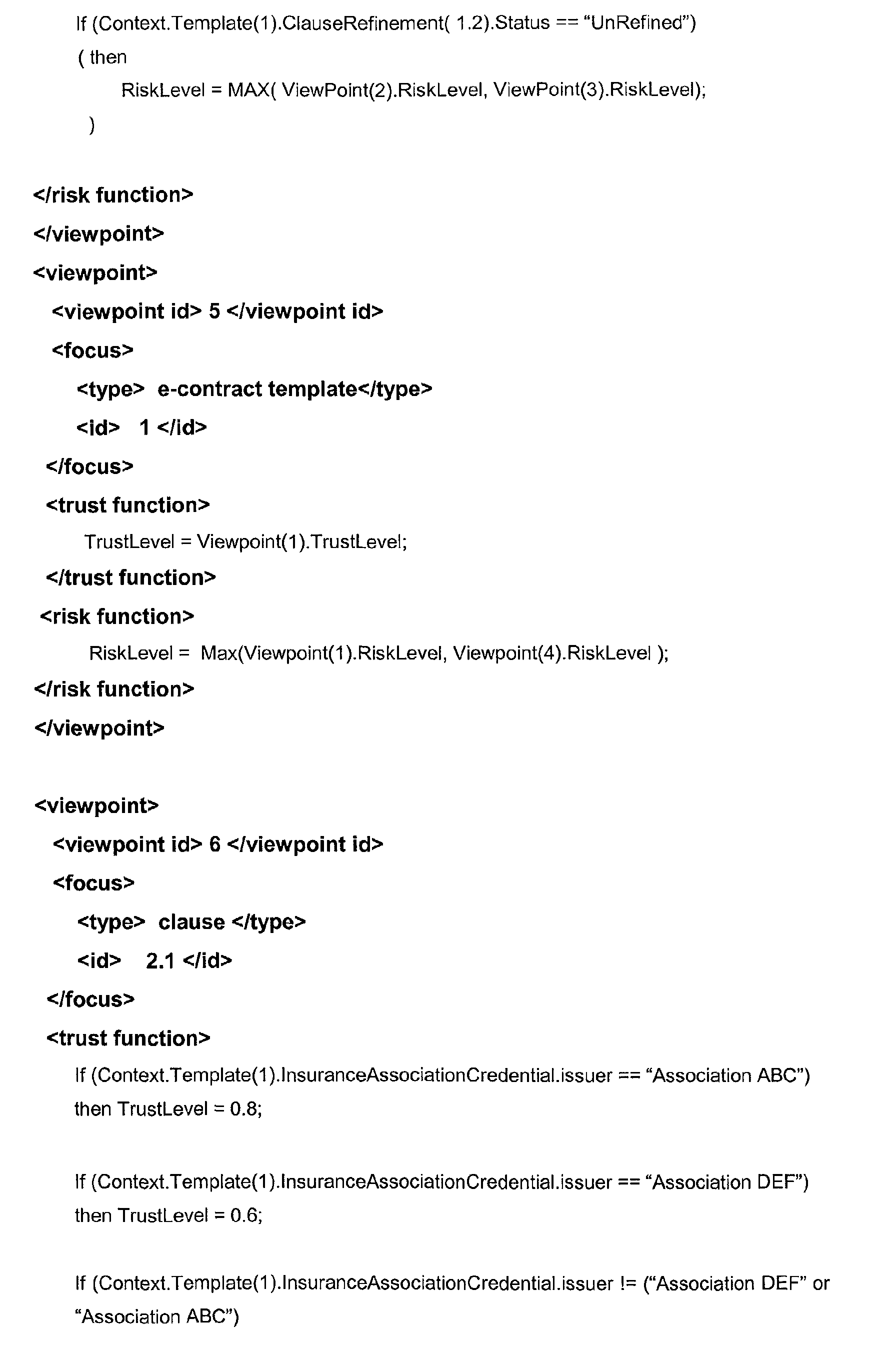

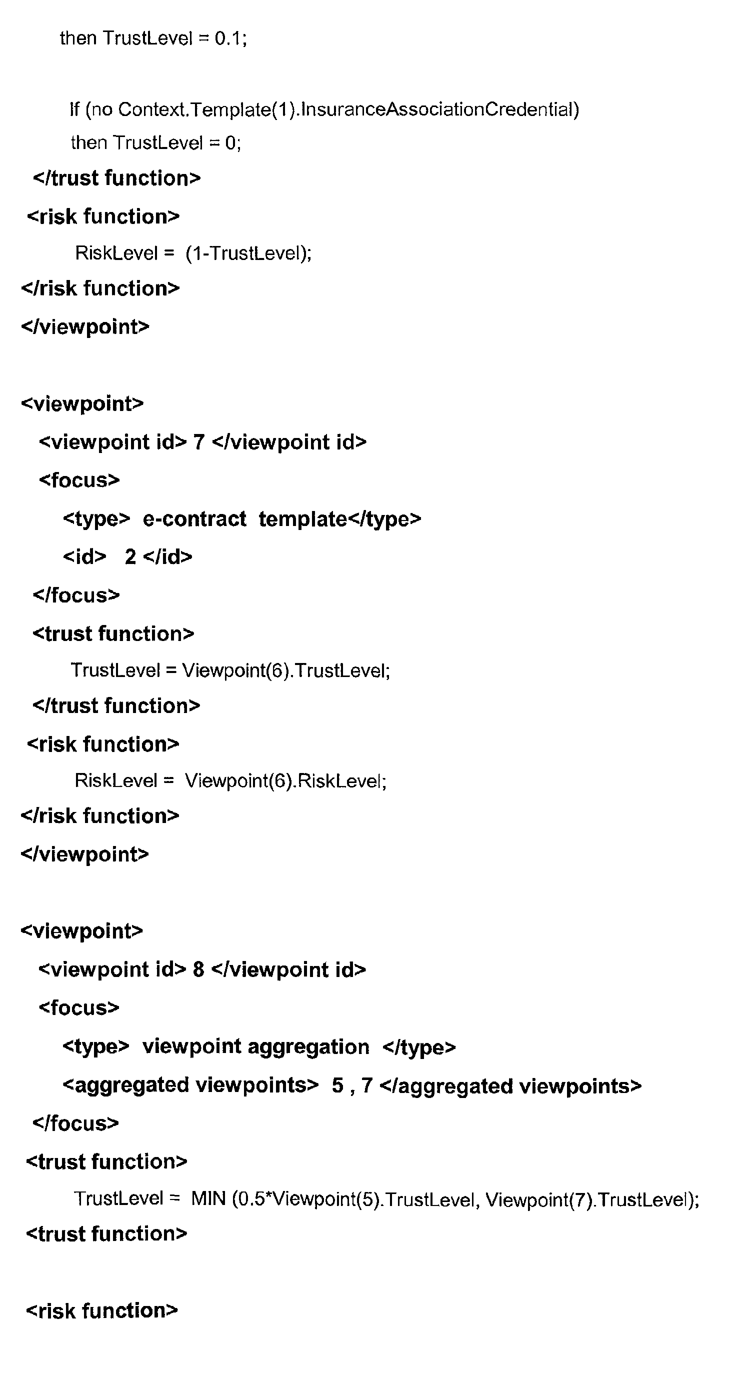

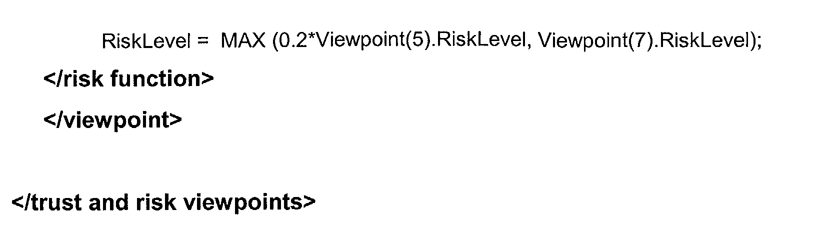

The above viewpoints 5 are stored in the risk and trust functions and viewpoints database 4. The identifiers 7 specified in the e-contract templates are used to link their components (i.e. the template, clauses, options and refinement items) to viewpoints 5.

The above example e-contract template for insurance of AAA's headquarters building and contents contains 8 viewpoints as detailed below:
Viewpoint (1) provides a measure of risk and trust for clause (1) of the first e-contract template;
Viewpoints (2) and (3) provide measures of risk and trust for the options 2.1 and 2.2 of clause (2) of the first e-contract template;
Viewpoint (4) aggregates measures of risk and trust associated to viewpoints 2 and 3 to provide a unique measure of risk and trust for clause (2) of the first e-contract template;
Viewpoint (5) provides an overall measure of risk and trust for the first e-contract template, based on measures of risk and trust of some of its clauses (as specified by viewpoints (1) and (4);
Viewpoint (6) provides a measure of risk and trust for the clause (1) of the second e-contract template;
Viewpoint (7) provides an overall measure of risk and trust for the second e-contract template, based on measures of risk and trust of its clause (1) (as specified by viewpoint (6));
Viewpoint (8) aggregates the measures of risk and trust for the two e-contract templates (as specified by viewpoints (5) and (7)).

Risk and trust functions defined within viewpoints 5 may use information retrieved from different sources and may manipulate it with multiple operators. In some cases conditions are used to test multiple cases.

The example considered above is simplistic, however, in a more realistic case the above functions will involve complex computations, including measures of average and deviance.

In the above, simplified example, a few keywords (commands) have been introduced which are explained as follows:
Context.Template(<X>).<credential>.<attribute>: this command retrieves the value of an attribute (if it exists) associated to a credential available during the "e-contract template" X (the remote trader must have provided this credential during the negotiation process). Note the assumption is made that at any time there is only one negotiation going on for each e-contract template. In general this would not be the case as there could be multiple parallel negotiations being conducted for a template. The agent 1 must therefore provide proper commands having the appropriate syntax to address the situation where multiple parallel negotiations are being conducted.
Context.Template(X).ClauseRefinement(Y).Status: this command returns "Refined" if the clause Y has been refined;
Context.Template(X).ClauseRefinement(Y).Selection: this command returns the option that has been selected during the refinement of clause Y;
ViewPoint(X).TrustLevel: it gets the value of the TrustLevel associated to the viewpoint X;
ViewPoint(X).RiskLevel: it gets the value of the RiskLevel associated to the viewpoint X;

Templates, clauses, options, refinements and viewpoints, are referred to by using their unique identifiers.

E-contract templates and viewpoints definition files need to be properly compiled and represented by objects, programmatically accessible by the agent 1. Explicit links between e-contract templates components and viewpoints 5 are built at this time.

To demonstrate how Risk and Trust values may be calculated, a few values of trust and risk, at different levels of abstraction (viewpoints) have been calculated for the e-contract templates examples discussed above.

The following assumptions have been made:
the agent is negotiating both e-contract templates ((1) and (2)), in parallel, with two different remote companies;
the agent is negotiating the e-contract template (1) with Company (1);
Company (1) has provided the agent with a certificate issued by "Association XYZ", as required;
no option has yet been selected for clause 1.2;
the agent is negotiating the e-contract template (2) with Company (2);
no extra information has yet been provided by Company (2) to the negotiation engine 8.

Given the above assumptions the negotiation engine 8 calculates the following level of trust and risk.

### Viewpoint 1

TrustLevel = 0.8 (required credential is available)
RiskLevel = (1 - 0.8) = 0.2

### Viewpoint 2

TrustLevel = 0.8 (same trust level as viewpoint 1)
RiskLevel = 0.5*0.2 = 0.1

### Viewpoint 3

TrustLevel = 0.8 (same trust level as viewpoint 1)
RiskLevel = 0.2*0.2 = 0.04

### Viewpoint 4

RiskLevel = MAX(0.1, 0.04) = 0.1
(no option has been selected, so last rule applies)
(note that no trust level is calculated here)

### Viewpoint 5

TrustLevel = 0.8
RiskLevel = MAX(0.2, 0.1) = 0.2

### Viewpoint 6

TrustLevel = 0
(no credentials has been provided)
RiskLevel = (1-0) = 1

### Viewpoint 7

TrustLevel = 0
RiskLevel = 1

### Viewpoint 8

TrustLevel = MIN (0.5*0.8, 0) = 0
RiskLevel = MAX (0.2*0.2, 1) = 1

The above viewpoints 5 are viewed in the context of e-contract templates 3 and their aggregations. For example at the template level and their aggregation, the trust and risk levels are:
e-contract template 1 → viewpoint 5
   TrustLevel = 0.8
   RiskLevel = 0.2
e-contract template 2 → viewpoint 7
   TrustLevel = 0
   RiskLevel = 1
aggregated view about the two e-contract templates → viewpoint 8
   TrustLevel = 0
   RiskLevel = 1

In this example the refinement of e-contract template (2) dominates the whole refinement process. The situation is very risky (and untrusted) because the insurer of the company AAA building has provided no "credentials". At the higher viewpoint level (8), the refinement of e-contract template has little influence.

Given the above trust and risk levels, the negotiation engine 8 can make decisions. For example, at the level of e-contract template (2), the negotiation engine 8 may require the remote trader (Company (2)) to provide trusted credentials to carry on the negotiation process. In this example, if Company (2) provides the negotiation engine 8 with a proper credential 14, then trust and risk levels are going to dynamically change, at viewpoints 7 and 8.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier be any entity or device capable of carrying the program.

For example, the carrier may comprise a storage medium, such as ROM, or example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Although the invention has been shown and described with respect to a best mode embodiment thereof, it should be understood by those skilled in the art that the foregoing and various other changes, omissions and additions in the form and detail thereof may be made therein without departing from the scope of the invention as claimed.

## Claims

1. A method of determining risk and trust for electronic negotiation of contracts, comprising the steps:
receiving a contract proposal from a negotiation agent (15);
analysing the contract proposal using a contract template (3) and from different viewpoints (5) to determine measures of the risk and trust involved;
formulating a response (20) from the measures of risk and trust to send to the negotiation agent (15); and
returning the response (20) to the negotiation agent (15).

2. A method according to claim 1, wherein all the steps are conducted in real-time.

3. A method according to claim 1 or 2, wherein the step of analysing the contract proposal from different viewpoints (5) is carried out in the context of all contract terms and conditions comprising the contract proposal.

4. A method according to any one of claims 1 to 3, wherein the step of analysing the contract proposal from different viewpoints (5) is carried out in the context of past contract proposals.

5. A method according to any one of claims 1 to 4, wherein the step of analysing the contract proposal from different viewpoints (5) is carried out at the level of aggregations of claims of the contract proposal.

6. A method according to any one of claims 1 or 5, wherein the step of analysing the contract proposal from different viewpoints (5) is carried out at the level of each claim of the contract proposal.

7. A method according to any one of claims 1 to 6, wherein the step of analysing the contract proposal comprises:
associating metadata to contract templates (3) and to aggregations of contract templates to describe risk functions and trust functions for the contract proposal; and
determining each viewpoint (5) from one or more of the risk and the trust functions.

8. A method according to claim 7, wherein the step of associating metadata further comprises:
implementing the risk and the trust functions using a macro, a script or a set of rules.

9. A method according to claim 7 or 8, wherein the risk functions evaluate the risk involved for the contract proposal from a calculus of the trustworthiness of all information received from external sources such as the negotiating agent(15) by using trust functions.

10. A method according to claim 7 or 8, wherein the trust functions evaluate the trust involved for the contract proposal from an examination of contextual risks by using risk functions.

11. A method according to any one of claims 3 to 10, further comprising:
calculating risk mitigation tactics on the basis of analysis of the measures of risk and trust involved for the contract proposal using a negotiation engine (8), whereby the step of formulating a response (20) is influenced by the risk mitigation tactics.

12. A method according to claim 11, wherein the risk mitigation tactics comprise:
requesting trusted information as a risk mitigation tactic.

13. A method according to claim 11 or 12, wherein the risk mitigation tactics comprise:
requesting re-negotiation of particular contract terms as a risk mitigation tactic.

14. A negotiating agent (1) for measuring risk and trust in real time during electronic negotiation of contracts comprising:
an evaluation engine (9) for receiving a contract proposal and evaluating the risk and trust viewpoints (5) for the contract proposal;
a risk and trust functions and viewpoints store (4) for storing metadata associated with contract templates (3), and accessible by the evaluation engine (9) for evaluating the risk and trust viewpoints (5);
a contract context store for storing contextual data associated with contract negotiation, and accessible by the evaluation engine for evaluating the risk and trust viewpoints;
a negotiation engine (8) for receiving risk and trust viewpoints from the evaluation engine, and driven by a utility function for evaluating the effect of the contract proposal from different levels;
a contract template store (2) for storing metadata associated with contract templates (3), and accessible by the evaluation engine (9) for evaluating the risk and trust viewpoints (5) and accessible by the negotiation engine (8) for evaluating the effect of the contract proposal; and
a contract history repository (10) for storing data associated with past contracts, and accessible by the evaluation engine (9) for evaluating the risk and trust viewpoints (5) and the negotiating engine (8) for evaluating the effect of the contract proposal,
wherein the negotiation engine (8) is configured for outputting a response (20) that is dependent on the evaluation of the effect of the contract proposal.

15. A negotiating agent according to claim 14, wherein the evaluation engine (9) comprises:
an interpreter (11) for retrieving relevant metadata from the functions and viewpoints store (4) and for interpreting risk and trust functions at different levels of abstraction as defined by metadata; and
a trust/risk viewpoints manager (12) for composing measures of risks and trusts at different levels of abstraction by aggregating and correlating functions.

16. A computer readable storage medium storing instructions that, when executed by a computer, cause the computer to perform a method of determining risk and trust for contracts under electronic negotiation according to any one of claims 1 to 13.

17. A messaging protocol for relaying inter-agent communications between negotiating agents using the method according to any one of claims 1 to 13.
